# EUROPÄISCHE PATENTSCHRIFT

(11) **EP 0 598 873 B1**
(45) Veröffentlichungstag und Bekanntmachung des Hinweises auf die Patenterteilung: **04.09.2002**
(21) Anmeldenummer: 93912523.3
(22) Anmeldetag: 11.06.1993
(51) Int. Cl.: C08G 18/70, C08G 18/80

(54) **VERFAHREN UND STOFFMISCHUNG ZUR HERSTELLUNG REAKTIVER SCHMELZMASSEN**
PROCESS AND MIXTURE OF SUBSTANCES FOR PRODUCING REACTIVE MELTS
PROCEDE ET MELANGE DE SUBSTANCES POUR FABRIQUER DES MATIERES FONDUES REACTIVES

(30) Priorität: 15.06.1992 CH 188392
(43) Veröffentlichungstag der Anmeldung: 01.06.1994
(73) Patentinhaber: Collano AG, 6203 Sempach-Station (CH)
(72) Erfinder: Abend, Thomas P., CH-9010 St. Gallen (CH)
(74) Vertreter: Hepp, Dieter
(86) Internationale Anmeldenummer: CH9300152
(87) Internationale Veröffentlichungsnummer: WO93025599

(56) Entgegenhaltungen:
- EP-A- 0 153 579
- EP-A- 0 431 413

## Beschreibung

Die Verwendung von Schmelzmassen zum lösungsmittelfreien Verkleben, Verbinden und Beschichten von festen oder flexiblen Materialien ist heute Stand der Technik und wird auch aus ökologischen Gründen bevorzugt. In den Formulierungen werden heute je nach Anforderung verschiedene thermoplastische Polymere verwendet, beispielsweise unter anderem Polyethylen, Copolymere des Ethylens mit Vinylacetat, Copolymere des Ethylens mit Acrylsäureestern oder Methacrylsäureestern, Acrylate oder Methacrylate, Polymere oder Copolymere der alpha-Olefine, Copolymere des Styrols mit Isopren oder Butadien, Polyamide und Copolyamide, Polyester und Copolyester, thermoplastische Polyurethane und Epoxyde.

Ein bis heute ungelöstes Problem ist die Thermoplastizität der Schmelzmassen oder Schmelzkleber in der Nähe des Erweichungspunktes und bei Temperaturen über dem Erweichungspunkt sowie die Empfindlichkeit der Verklebung gegen Lösungsmittel. In der Nähe des Erweichungspunktes sinkt die Wärmestandfestigkeit der Verbindung stark ab, beim Ueberschreiten des Schmelzpunktes verlieren die Schmelzkleber ihre Festigkeit, was zum Versagen der Klebeverbindung führen kann.

Als Beispiel seien die textilen Schmelzklebepulver oder -filme erwähnt: diese sollen bei möglichst tiefen Applikationstemperaturen hohe Haftung ergeben (Verkürzung der Klebedauer, Vermeidung von thermischen Schäden am Material, Vermeidung des Durchschlagens des Klebers), die Klebverbindung soll aber nachher bei den nachfolgenden Bearbeitungs- und Behandlungsschritten (Pressen, Bügeln, Formen, Trocknen auf Formen) den damit verbundenen hohen Temperaturen widerstehen. Die Verklebungen werden dabei Temperaturen ausgesetzt, die gleich gross oder vielfach höher sind als der Erweichungspunkt des Klebers oder die vorher angewandte Verklebungstemperatur. Die Masshaltigkeit der verklebten, textilen Gebilde ist durch diese Behandlungen gefährdet.

Die gleichen unerwünschten Effekte, das heisst Versagen der Klebeverbindung, treten auf, wenn der Schmelzkleber im Gebrauch durch Lösungsmittel, wie sie in der chemischen Reinigung verwendet werden, oder durch zu hohe Waschtemperatur angequollen wird.

Es hat nicht an Versuchen gefehlt, die Thermoplastizität und die Löslichkeit der Klebeverbindungen von Schmelzmassen oder Schmelzklebern zu reduzieren oder zu eliminieren. So wurden mit Feuchte reagierende Isocyanat- oder Silangruppen ins Polymer eingeführt. Bei Einwirkung von Feuchte oder Wasser nach dem Auftragen des Schmelzklebers entstehen dreidimensionale, unschmelzbare Polymere. Nachteilig ist, dass man diese Systeme bis zur Verarbeitung unter Ausschluss von Feuchtigkeit aufbewahren muss. Dreidimensionale, unschmelzbare, vernetzte Polymere entstehen auch in wärmereaktiven Systemen aus funktionellen Polymeren mit heisshärtenden Vernetzern, mit Peroxyden, aus hydroxyfunktionellen oder aminofunktionellen Polymeren mit blockierten Isocyanaten, festen Epoxyden mit Harnstoffderivaten usw.. Nachteilig ist bei den geschilderten reaktiven Schmelzklebern, dass die Vernetzungstemperatur 130 bis 140°C übersteigt. Praxisnahe Reaktionszeiten erfordern noch höhere Temperaturen, welche die Verwendung verschiedener, temperaturempfindlicher Substrate verwehren.

Die Zusammensetzung von nichtreaktiven, von feuchtigkeitsoder wärmereaktiven Schmelzmassen, ihre Vorteile oder Nachteile, sind dem Fachmann bekannt und in Literatur und Patenten beschrieben, zum Beispiel in: Schmelzklebstoffe, Vol. 4a (1985), 4b (1986), 4c (1987), Schmelzhaftklebstoffe Vol. 6a (1990), der Klebstoff-Monographien, R. Jordan, Hrsg., Hinterwaldner-Verlag (München).

Aufgabe der Erfindung ist es, die Nachteile des Bekannten zu vermeiden, insbesondere also Schmelzmassen herzustellen, die
- vorgeformt oder auf die zu verbindende Fläche aufgetragen werden können,
- sich anschliessend durch Wärmeentzug verfestigen,
- nachher, nach beliebiger Zeit, wieder auf dem Substrat durch Wärmezufuhr aufgeschmolzen, gegebenenfalls gefügt,
- und nachfolgend durch weitere Temperaturerhöhung irreversibel vernetzt werden können.

Überraschenderweise wurde nun ein Verfahren zur Herstellung reaktiver, ungeformter oder vorgeformter Schmelzmassen gefunden, welches die bisher bekannten Nachteile nicht aufweist und die Anwendungsgebiete der Schmelzmassen oder -kleber beträchtlich erweitert.

Erfindungsgemäss wird die gestellte Aufgabe gemäss dem unabhängigen Patentanspruch gelöst. Besonders vorteilhaft lässt sich die Erfindung realisieren, wenn
a) geeignete, schmelzbare Polymere oder Polymermischungen A, die bei Temperaturen über 40°C, besonders über 55°C in den flüssigen Zustand übergehen, welche isocyanatreaktive funktionelle Gruppen, wie Hydroxyl- oder Aminogruppen, tragen,
b) mit pulverförmigen, festen, oberflächendesaktivierten Isocyanaten B mit mindestens zwei Isocyanatgruppen, oder einer Suspension oder Dispersion aus pulverförmigen, festen, Di- oder Polyisocyanaten B, die mit einem Desaktivierungsmittel C oberflächenbehandelt sind, in einer schwerflüchtigen Trägerflüssigkeit,
c) in ungefähr stöchiometrischem Verhältnis bei einer Temperatur von mindstens 40°C in Schichten vermischt werden, so dass die resultierende Stoffmischung Schichten aufweist, in denen das Verhältnis 1 Polymer A zu 2 festem Isocyanat B und Desaktivierungsmittel C verschieden, das heisst grösser bzw. kleiner ist als das durchschnittliche Verhältnis dieser Stoffe oder Stoffgemische in der gesamten Stoffmischung,
d) die inhomogene Mischung in einer der vorgesehenen Anwendung entsprechenden Form ausgetragen und durch Abkühlen unter den Erweichungspunkt der Mischung verfestigt wird.

Diese vorgeformten oder gegebenenfalls ungeformten, festen, reaktiven Schmelzmassen sind bei Raumtemperatur lagerfähig und behalten die latente Thermoreaktivität. Sie können nach beliebiger Zeit durch Erwärmen des Verbundes aus Substrat und vorapplizierter Schmelzmasse oder -kleber wieder verflüssigt, gefügt, dann durch Erhöhen der Temperatur über die "Aufdikkungs-Temperatur" irreversibel vernetzt werden. Diese Schmelzmassen dienen zum Verbinden, Dichten, Laminieren oder Beschichten von Holz, Kunststoffen, Metallen, Glas, Textilien, synthetischen Flächengebilden, Karton, Papier, Folien, und dergleichen mehr.

Reaktivsysteme aus Polymeren, welche Hydroxyl- oder Aminogruppen tragen, und desaktivierten, festen pulverförmigen Isocyanaten, sind aus den Patentschriften EP-062 780, EP-100 507, EP-103 323, DE- 32 30 757, DE-34 03 499, DE-34 03 500, sowie aus der Literatur bekannt, zum Beispiel aus: Blum, R.; Schupp, H., Prog. Org. Coat. 1990, 18(3), S. 275 - 288.

Im beschriebenen Verfahren wird ein homogenes Gemisch eines flüssigen Polyols oder Polyamins und eines mit Aminen oberflächendesaktivierten, festen Isocyanats hergestellt, welches bei Raumtemperatur nicht reagiert. Bei Erreichen oder Überschreiten der sogenannten "Aufdickungs-Temperatur" oder Reaktionstemperatur, die über 55°C , bevorzugt über 80°C liegt, setzt die Reaktion zwischen festen Isocyanaten und den funktionellen Gruppen des Polymers ein, gegebenenfalls beschleunigt durch Katalysatoren. Diese Reaktion führt zum vernetzten, hochmolekularen Polyurethan oder Polyharnstoff.

Als "Aufdickungs-Temperatur" wird jene Mindesttemperatur bezeichnet, bei der die Viskosität der Schmelzmasse durch Reaktion des desaktivierten Isocyanats mit dem hydroxyl- oder aminogruppenhaltigen Polymer unter Bildung von Urethäne- oder Harnstoffgruppen anzusteigen beginnt. Diese Temperatur kann u.a. durch das Einsetzen der exothermen Reaktion zwischen den genannten Komponenten mit thermoanalytischen Methoden, z.B. DSC, ermittelt werden.

Es wurde u.a. in der DE-32 30 757 vorgeschlagen, feste Polyole mit einem Erweichungspunkt im Bereich von 45 bis 65°C mit den desaktivierten, festen Isocyanaten zu vermischen. Nach Homogenisierung und Entgasung des Gemisches lässt man die Schmelze erstarren und bringt sie durch einen geeigneten Mahlprozess in Granulatform. Zu einem geeigneten Zeitpunkt kann die bei Raumtemperatur lagerstabile Reaktivmischung in eine auf ca. 70 bis 100°C geheizte Form gebracht werden. Nach dem Aufschmelzen verfestigt sich die dünnflüssige Schmelze bei 100 bis 120°C durch Hitzestoss.

Ein Hinweis auf das vorliegende erfindungsgemässe, kontinuierliche Verfahren zur Erzeugung einer eine Schichtstruktur aufweisenden, latent reaktiven Schmelzmasse und deren Verwendung zum Erzielen einer kraftschlüssigen Verbindung mit einer oder mehreren Substratoberflächen geht aus diesem Patent nicht hervor.

Es werden in der Folge die Mischungsbestandteile wie folgt . bezeichnet:
- Polymer A, für thermoplastisches Polymer mit funktionellen, isocyanatreaktiven Gruppen,
- Isocyanat B, für feste Di- oder Polyisocyanate,
- Desaktivierungsmittel C, umfassend gebundenes Desaktivierungsmittel C' und freies Desaktivierungsmittel C", welche zusammen das Desaktivierungspotential bilden,

Als bei Raumtemperatur feste Polymere A, mit Schmelzpunkt 40°C oder höher, eignen sich zur Durchführung des erfindungsgemässen Verfahrens:
Hydroxyfunktionelle oder aminofunktionelle, aliphatische oder aromatische Polyester, Polycaprolactone, Polycarbonate, Polyacetale, Polyacrylate, Polyamide, Polyurethane, Polyether, Polythioether,
Copolymere von Styrol oder alpha-Methylstyrol mit Allylalkohol, niedermolekulare Copolymere von Ethylen oder alpha-Olefinen mit Hydroxyethyl- oder Hydroxypropyl-acrylaten oder -methacrylaten, nebst anderen, nichthydroxyfunktionellen Monomeren, wie Ethylacrylat, Butylacrylat, Ethylmethacrylat, Butylmethacrylat,
Propfpolymere durch Graft-Reaktionen von Hydroxyethyl- oder Hydroxypropyl-acrylat, -methacrylat, Allylakohol, Aminoalkylund Mercaptoalkyl-alkoxysilane, an Polymere von Ethylen, alpha-Olefinen, oder Copolymeren von Ethylen, alpha-Olefinen, mit Vinylacetat, Ethyl-, Butyl-acrylat oder -methacrylat, Verseifungsprodukte von Copolymeren des Ethylens mit Vinylacetat, hydroxylgruppen-haltige Derivate von Fettsäuren, über einer Temperatur von 40°C flüssige, unter dieser Temperatur feste, hydroxy- oder amino-funktionelle Prepolymere, die aus der Umsetzung von nieder- oder hochmolekularen Polyolen und Diaminen mit Di- oder Polyisocyanaten erhalten werden.

Es können auch Gemische der vorgängig genannten Polymere eingesetzt werden. Die Zahl der funktionellen Gruppen pro Polymermolekül soll im Durchschnitt zwischen 1.5 und 6, vorzugsweise zwischen 1.8 und 4 liegen, die Molekulargewichte im Bereich von 400 bis 25'000.

Der Schmelz- oder Erweichungspunkt bzw. der Erstarrungspunkt der Polymere soll über 40°C, bevorzugt über 55°C liegen. Oberste Grenze für den Schmelz- oder Erweichungspunkt des Polymeren ist die "Aufdickungs-Temperatur" des oberflächendesaktivierten Isocyanats.

Der Anteil der Polymerkomponente A soll vorteilhaft mindestens 40 Gewichtsprozent des gesamten Bindemittels betragen.

Als organische Isocyanate B kommen vor allem aliphatische, cycloaliphatische und aromatische, bei Raumtemperatur feste, mehrwertige Isocyanate in Betracht. Sofern die mehrwertigen Isocyanate bei Raumtemperatur flüssig sind, werden sie durch chemische Umsetzung in bei Raumtemperatur feste Polyisocyanate übergeführt. Beispielhaft seien als Reaktionsprodukte genannt: Ester-, Harnstoff-, Biuret-, Allophanat-, Carbodiimid-, Uretdion-, Urethan-, oder Isocyanuratgruppen enthaltende Di- oder Polyisocyanate.

Die festen Isocyanate sollen im funktionellen Polymer oder in der Trägerflüssigkeit der Suspension bei Temperaturen unterhalb der Aufdickungs-Temperatur unlöslich sein.

Für den vorgesehenen Zweck haben sich besonders bewährt:
- dimerisierte, Uretdiongruppen aufweisende 2,4- und 2,6-Diisocyanato-toluole oder 2,4'- und 4,4'-Diisocyanatodiphenyl-methane.
- 1,5-Naphthalin-diisocyanat, Bi-toluylen-diisocyanate oder 3,3'-Dimethyl-4,4'-diphenyl-diisocyanat.
- die mit Urethan-, Harnstoff-, Uretdion-, Isocyanuratgruppen modifizierten Di- oder Polyisocyanate auf Basis von 1,6-Hexandiisocyanat, 1-Isocyanato-3,3,5-trimethyl-5-isocyanato-methyl-cyclohexan, Dimethylxylylen- und Tetramethylxylylen-diiso-cyanat, 2,4'-, 4,4'-Diisocyanato-diphenylmethan, 2,4 und 2,6-Diisocyanato-toluol.
- 4,4'-Diisocyanato-3,3'-dimethyl-diphenylharnstoff.
- Reaktionsprodukte von Diisocyanaten mit Trimethylolpropan oder anderen kurzkettigen Polyolen oder Polyaminen.

Es können auch Gemische von festen, pulverförmigen Isocyanaten verwendet werden.

Um eine unkontrollierte und spontane Reaktion zwischen dem pulverförmigen, festen Isocyanat und den funktionellen Polymeren, Polyolen, Polyaminen bei der Vereinigung mit dem flüssigen Polymer oder nachher bei der Lagerung und Verarbeitung des Schmelzklebers zu verhindern, werden die pulverförmigen, festen Isocyanate an ihrer Oberfläche desaktiviert.

Das Desaktivierungsmittel wird so gewählt, dass es an der Oberfläche der Isocyanatteilchen durch chemische Reaktion gebunden wird und auf diese Weise eine reaktionsverhindernde Phasentrennung zwischen den Polyisocyanatteilchen und den übrigen reaktiven Komponenten, das heisst den hydroxy- und aminofunktionellen Polymeren und niedermolekularen funktionellen Vernetzern oder Kettenverlängerungsmitteln, bewirkt.

Für die Desaktivierung der Isocyanatgruppen des festen Isocyanates werden 0,1 bis 25 %, insbesondere 0,2 bis 12 % Aequivalentprozent der vorhandenen Isocyanatgruppen des festen Isocyanats mit dem Desaktivierungsmittel C umgesetzt. Um stabile Schmelzmassen zu erhalten, muss immer mit einen Ueberschuss an Desaktivierungsmittel gearbeitet werden. Dieses "freie" Desaktivierungsmittel C'' bildet zusammen mit dem oberflächlich "gebundenen" oder "reagierten" Desaktivierungsmittel C' das "Desaktivierungspotential". Das freie Desaktivierungsmittel C'' kann vom gebundenen Desaktivierungsmittel C' verschieden sein, indem in zwei Stufen, beginnend mit dem Desaktivierungsmittel C', oberflächenstabilisiert wird. Das Verhältnis von freiem Desaktivierungmittel C'' zu gebundenem Desaktivierungsmittel C' kann 0.1 bis 10 betragen.

Die optimale Stabilisatorkonzentration muss entsprechend dem Verwendungszweck der reaktiven Schmelzmasse und entsprechend der Korngrösse des festen Isocyanats experimentell ermittelt werden. Die mittlere Teilchengrösse bestimmt die benötigte Stabilisatorkonzentration, wobei Teilchen mit kleinerer Teilchengrösse und entsprechend grösserer Oberfläche mehr stabilisierende Amine benötigen.

Die zitierte Literatur (Blum, R.; Schupp, H., Prog. Org. Coat. 1990, 18(3), 275 - 288) und die oben zitierten Patente geben Hinweise über das Verfahren der Bestimmung der optimalen Stabilisatorkonzentration.

Die festen Polyisocyanate B werden vorzugsweise durch Einwirkung von primären und sekundären aliphatischen Aminen, Dioder Polyaminen, Hydrazinderivaten, Amidinen, Guanidinen, desaktiviert. Weitere Desaktivierungsmittel sind in den oben zitierten Patentschriften aufgezählt.

Bewährt haben sich Ethylendiamin, 1,3-Propylendiamin, Diethylentriamin, Triethylen-tetramin, 2,5-Dimethylpiperazin, 3,3'-Dimethyl-4.4'-Diaminodicyclohexylmethan, Methylnonan-diamin, Isophorondiamin, 4,4'-Diaminodicyclohexylmethan, Diamino- und Triamino-polypropylenether (Jeffamine^{R} von Texaco Chem. Co.), Polyamidoamine (Euretek^{R}, Schering AG Berlin), Aminoalkyl-alkoxysilane, und Gemische von Mono-, Diund Polyaminen.

Die festen, oberflächendesaktivierten Isocyanate sind empfindlich gegen mechanische Beanspruchung durch Anwendung hoher Scherkräfte. Durch übermässige Scherbeanspruchung, vor allem in Dosier- und Förderpumpen, in den Leitungen, in den statischen Mischern oder unter den Rakeln, kann die phasentrennende Oberflächenschicht (bestehend vor allem aus Polyharnstoffen) zerstört und die Oberfläche des festen Isocyanats blossgelegt werden. Vorzeitige Reaktion ist die Folge. Durch die Gegenwart des Desaktivierungsmittel C'' ist das System "selbstheilend": Solange das Desaktivierungsmittel C" im System vorhanden ist, reagiert die freigelegte Isocyanatoberfläche schnell und bevorzugt mit den stabilisierenden Aminen unter spontaner Ausbildung einer neuen, phasentrennenden Polyharnstoffschicht.

Als Desaktivierungsmittel C'' haben sich niedermolekulare Amine oder Polyamine mit Molekulargewichten bis 450 besonders bewährt, indem diese rascher an die verletzte Oberfläche des festen Isocyanats diffundieren, als höhermolekulare Polyamine.

Die Desaktivierungsreaktion kann auch vorgängig in einem inerten flüchtigen Lösungsmittel erfolgen. Das Lösungsmittel kann nach Ende der Desaktivierungsreaktion entfernt werden, gegebenenfalls nach Zufügen eines zweiten desaktivierenden Amins, welches als freies Desaktivierungsmittel C'' wirkt.

In der gesamten Stoffmischung beträgt das Verhältnis der Isocyanatgruppen aus reaktivem, festem Isocyanat B zur Summe aus Amino- und/oder Hydroxylgruppen des Polymers A und dem Desaktivierungsmittel C, 0,5 bis 2, bevorzugt 0,8 bis 1,5 (Angaben in Aequivalenten).

Flüssiges Medium für die Bereitung der Supensionen der festen Isocyanate B können hochsiedende Lösungsmittel, flüssige oder niederschmelzende Weichmacher oder niederschmelzende, niedermolekulare, gegebenenfalls funktionelle Polymere oder Harze sein. Bei der Desaktivierungsreaktion reagieren die festen Isocyanate bevorzugt mit den gleichzeitig anwesenden stabilisierenden Aminen.

Die Verwendung von niedermolekularen und niederviskosen Trägerflüssigkeiten zur Herstellung der Suspension von festem, desaktiviertem Isocyanat kann vorteilhaft sein: Beim Dosieren, beim Pumpen, in den Leitungen und bei der Mischung mit der Polyolkomponente im statischen Mischer ist die Viskosität der Suspension und der damit einhergehenden Scherbeanspruchung auf die Oberfläche des desaktivierten Isocyanates klein.

Die isocyanatreaktiven Gruppen der Verbindungen, welche gegebenenfalls zur Bereitung der Suspension oder Dispersion des festen, desaktivierten Isocyanats dienen, müssen bei der Berechnung des NCO/NH+OH-Verhältnisses ebenfalls berücksichtigt werden.

Als gegebenenfalls weitere Hilfs- und Zusatzstoffe können zugegeben werden:
- Die dem Fachmann bekannten Urethankatalysatoren, vor allem organische Metallkatalysatoren. Tertiäre Amine können sich bei der offenen Lagerung der reaktiven Schmelzmassen verflüchtigen oder mit der Kohlensäure der Luft reagieren und so ihre Wirksamkeit einbüssen. Metallkatalysatoren für den vorgesehenen Zweck sind organische Zinn(II)-, Zinn(IV)-, Eisen-, Blei-, Kobalt-, Wismuth-, Antimon-, Zink-, Magnesium-verbindungen. Als Aminkatalysatoren können Diazabicyclooctan (Dabco) sowie Diazabicyclo-undecen (DBU) verwendet werden, vor allem nach partieller oder vollständiger Neutralisation mit organischen Säuren oder Phenolen. Die Katalysatoren werden in der Regel in einer Menge zwischen 0,001 und 3 Gewichtsprozenten, bezogen auf die Gesamtzusammensetzung, eingesetzt.
- Polymere ohne isocyanatreaktive Gruppen, geringe Mengen Lösungsmittel, Weichmacher, Verschnittmittel und Harze, Pigmente, Farbstoffe, Füllstoffe, pyrogene Kieselsäure, Russ, kurzgeschnittene Fasern, Metallpulver, Metalloxyde, Ferrite, Alterungsschutzmittel, Lichtschutzmittel, fungistatisch oder bakteriostatisch wirksame Stoffe, Additive zur Steuerung der Viskosität, Thixotropiemittel, Netzmittel, Haftmittel. Die Verwendung von solchen Additiven in Schmelzmassen sind Stand der Technik.

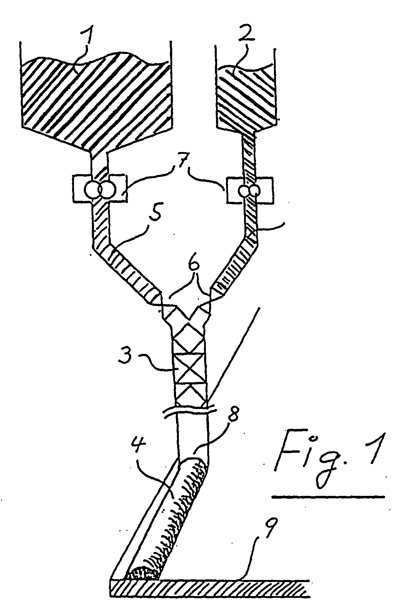

In einer ersten Ausführungsform des erfindungsgemässen Verfahrens, wie in Fig. 1 dargestellt, kann die kontrollierte Vermischung der beiden erfindungsgemässen Komponenten,
1 - des Polymeren A
   und
2 - der Suspension des desaktivierten, festen Isocyanats B in einer Trägerflüssigkeit 2, welche noch überschüssiges Desaktivierungsmittel C'' enthält,
in einer vollständig oder partiell beheizten Zweikomponentenmischmaschine mit statischem Mischer 3, wie sie für die Verarbeitung von 2-Komponenten-Anstrichmitteln, -Fugendichtungsmassen und -Klebstoffen gebräuchlich ist, geschehen. Diese Vorrichtungen sind Stand der Technik, dem Fachmann bekannt und im Handel erhältlich.

Statische Mischer 3 zum Vermischen von zwei oder mehreren Komponenten sind heute als Alternativen zu dynamischen Mischern Stand der Technik. Bewährt haben sich für den vorgesehenen Zweck vor allem die statischen Rohr-Mischer der Firma Sulzer AG (Winterthur, Schweiz), in denen die Vermischung radial und longitudinal mit einem Gerüst ineinander übergreifender Stege erfolgt, und die statischen Mischer System KenicsR nach US-Patent 3,286,992 oder die vergleichbaren statischen Mischer Statomix^{R} der Firma Mixpac Systems AG (Rotkreuz, Schweiz), mit in einem Rohr angeordneten, gegenläufigen Wendeln, die longitudinal mischen. Ein Element besteht zum Beispiel aus einer linksdrehenden Wendel von einer halben Kreisdrehung. Dieses wird gefolgt von einem Element mit einer rechtsdrehenden Wendel von einer halben Kreisdrehung.

Die statischen Mischer erlauben auch das Vermischen von mehr als zwei Teilströmen, beispielsweise einem dritten, separaten Strom einer Katalysatorlösung oder einer Pigmentdispersion.

Gemäss dieser Erfindung erlauben die statischen Mischer die Vermischung der Komponenten unter Bildung von Schichten oder Bezirken, indem nicht die Anzahl der Mischelemente eingesetzt wird, die für eine vollständige gleichförmige Vermischung notwendig wäre.

Am Ende des statischen Mischers resultiert ein Extrudat 4, welches nicht vollständig durchmischt ist. Dieses Extrudat besteht aus Schichten oder Teilbereichen, die wechselweise
- entweder reich sind an Polymeren A, oder
- reich sind an festem Isocyanat B und stabilisierenden Aminen C.

Durch den Ueberschuss an freiem Desaktivierungsmittel C'' in den isocyanatreichen Schichten erzielt man ganz besonders lagerstabile, vorgefertigte Schmelzmassen.

Dem Fachmann ist bekannt, dass zur Mischung mit einem statischen Wendel-Mischer 20 bis 32 Elemente, bevorzugt mindestens 24 Elemente, mit einem Mischer der Firma Sulzer mindestens 12 Elemente verwendet werden müssen, um zu einer homogenen Mischung zu gelangen. Bedingung ist, dass die Viskositäten der Komponenten sich nicht um mehr als um einen Faktor von 100 zu 1 unterscheiden.

Erfindungsgemäss wird so gearbeitet, dass 10 bis 22, bevorzugt 12 bis 18 Elemente eines Wendelmischers im Rohr des statischen Mischers verwendet werden. Bei gleicher Durchflussgeschwindigkeit entspricht diese Anzahl von Elementen ungefähr 50 bis 90 % der Anzahl Elemente, die notwendig wären, um eine homogene, molekulardisperse Mischung zu erzeugen, zum Beispiel der desaktivierenden Amine C'' im Polymeren A. Werden statische Mischer anderer Konstruktion verwendet, werden ebenfalls nur 50 bis 80 % der Anzahl Elemente verwendet, welche zur homogenen Mischung notwendigen wären.

Die Schichtstruktur der Mischung kann am Ende des statischen Mischers sichtbar gemacht werden, indem einer der Komponenten ein Farbstoff oder ein Farbpigment beigegeben wird. Die resultierenden Teilbereiche sind durch die Unterschiede der optischen Dichte der Komponenten sichtbar und messbar.

Die Dicke der Schichten oder Ausdehnung der Teilbereiche, welche entweder reich an Polymer A, oder reich an festem Isocyanat B und desaktivierendem Amin C sind, entspricht vorzugsweise ungefähr der mittleren Teilchengrösse der festen, desaktivierten Isocyanatteilchen und soll die maximale Teilchengrösse nicht wesentlich übersteigen. Die optimale Anzahl der Mischelemente im statischen Mischer muss durch Versuche ermittelt werden und wird durch die Viskosität, das Fliessverhalten der Komponenten oder der Mischung und den vorgesehenen Verwendungszweck der Schmelzmassen bestimmt.

Mischt man mit einem "Unterschuss" an Mischelementen, profitiert man überdies vom Vorteil eines niedrigeren Druckabfalls im statischen Mischer.

Der statische Mischer 3, die Leitungen 5, Dosiervorrichtungen 6 und Pumpen 7 in der Mischvorrichtung (Fig. 1) sind beheizt, wobei die Temperatur der beheizten Leitungen, Dosiervorrichtungen, Pumpen und Mischer unter der Aufdickungs-Temperatur des Isocyanats liegen muss.

Das Extrudat 4, d.h. die flüssige Schmelzmasse, wird durch Düsen 8 am Ende des statischen Mischers 3 ausgetragen, wobei die Form der Düse den Querschnitt der festen, unvernetzten Schmelzmasse bestimmt. Durch die Wahl der Düse und des Auftragsverfahrens lässt sich die flüssige Schmelzmasse beispielsweise als flächige Beschichtung, gegebenenfalls einoder zweiseitig auf ein Träger- oder Verstärkungsmaterial aufgebracht, als Raupe, als Profil, in Streifen und in Punkten auf Substrate 9 auftragen. Nach dem Verlassen der Düse wird der Kleber gekühlt, sei es durch die Umgebungsluft, durch den Gegenstand, auf den der Kleber appliziert wurde, oder durch Zufuhr von gekühlter Luft, Gasen oder inerten Flüssigkeiten.

Trägerfreie reaktive Schmelzmassen, zum Beispiel als Film, als Raupe, als Netz, als Granulat oder als ungeformter Körper, erhält man, indem der flüssige, nichtvernetzte Kleber auf einen Träger appliziert wird, der eine nichthaftende oder adhäsive Oberfläche trägt oder oberflächlich mit Trennmittel versehen ist. Nach dem Abkühlen des Klebers kann dieser von der Trägeroberfläche gelöst und sofort, oder bei der Applikation, auf die zu klebende, abzudichtende oder zu beschichtende Oberfläche appliziert werden.

Reaktive Heissschmelzpulver erhält man, indem die flüssige Mischung auf ein bewegliches, adhäsiv beschichtetes Förderband extrudiert und dort unter den Schmelzpunkt gekühlt wird. Nach dem Erstarren kann der Heisschmelzkleber vom Trägerband gelöst und nach bekannten Methoden, zum Beispiel durch Kaltmahlung, zu Granulat oder Pulver zerkleinert und gegebenenfalls in die gewünschten Fraktionen gesiebt werden. Die erfindungsgemässen Pulver dienen als pulverförmige, reaktive Schmelzkleber für textile Flächengebilde nach den bekannten Auftrageverfahren, zum Beispiel nach dem Aufstreu-Verfahren, dem Puderpunkt-Verfahren oder dem Pastenpunkt-Verfahren. Sie können aber auch als reaktive Schmelzklebepulver für die Verklebung von Kunststoffolien, Furnieren, Papieren, Metallfolien, Metallblechen und dergleichen, mit sich selbst oder mit Trägermaterialien, und für Beschichtungszwecke, zum Beispiel als Pulverlack, verwendet werden.

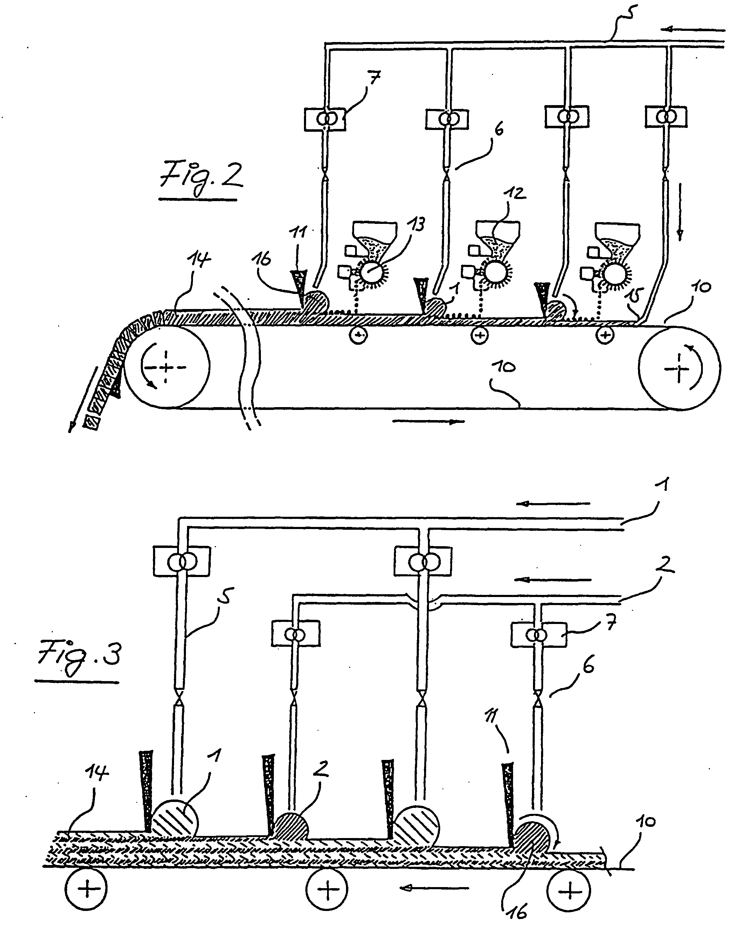

In einer anderen Ausführungsform des erfindungsgemässen Verfahrens, dargestellt in Fig. 2 und Fig. 3, bedient man sich eines bewegliches Trägerbandes 10, vor allem eines Metallbandes mit adhäsiver Oberfläche, das beheizt sein kann, und sich mit konstanter Geschwindigkeit unter den "Auftragsköpfen" für die einzelnen Schichten durchbewegt. Die erfindungsgemässe Stoffmischung wird so erzeugt, dass man
a) das geschmolzene Polymer A 1 mit einer Rakel 11 in einer Schichtdicke von 3µ bis 200µ auf ein bewegliches, adhäsiv beschichtetes Förderband 10 aufträgt,
b) das feste, oberflächendesaktivierte Isocyanat B in Pulverform 12 mit einer Streuvorrichtung 13 aufstreut oder als Suspension 2 des desaktivierten Pulvers in einem flüssigen Medium mit überschüssigem desaktivierenden Amin aufbringt, und zwar mit Streuvorrichtungen 13 resp. mit Rakeln 11, welche das Gewicht oder den Anteil des aufgebrachten Isocyanats im Verhältnis zum Polymergewicht dosieren und kontrollieren können,
c) die Schritte a) und b) solange wiederholt, bis die gewünschte Schichtdicke des mehrlagigen Verbundes 14, bestehend aus polymerreichen und isocyanatreichen Schichten, erzielt ist.
   Alternativ werden die flüssigen Ströme von
   (a) Polymer A, und der
   (b) Suspension von festem, desaktivierten Isocyanat B in einer Trägerflüssigkeit
      in definiertem Verhältnis gleichzeitig durch getrennte Öffnungen einer Mehrfachdüse extrudiert.
      Der noch flüssige oder pastöse Verbund kann vor der Verfestigung nachverformt, gepresst, verdichtet oder verstreckt werden.
d) Der Verbund 14, dessen Dicke 10µ bis mehrere Millimeter beträgt, kann flüssig oder nach Kühlung vom Träger gelöst und später zu Granulat oder zu Pulver mit Korngrössen bis zu 500µ nach bekanntem Verfahren zerkleinert und gegebenenfalls in die gewünschten Fraktionen gesiebt werden. Der Verbund kann auch in Film-, Raupen- oder Streifenform zu Klebezwecken oder als Beschichtungsmaterial weiterverarbeitet werden, gegebenenfalls verstärkt mit einem Trägermaterial, welches einseitig aufgebracht wird, oder in der Form eines Verstärkungsmaterials, welches im Verbund enthalten ist.

Als "Auftragskopf" oder Auftragsvorrichtung für die Schichten des Polymers A und der Suspension des festen Isocyanates B können Schlitzdüsen 15 oder Metallrakeln 11 dienen, welche beheizt werden können. Die Metallrakeln 11 sind so verstellbar, dass ein definierter Spalt gegenüber der Oberfläche der vorhergehenden Schicht eingehalten werden kann. Das flüssige Polymer A oder die Suspension B wird durch Pumpen 7 dosiert, der Schlitzdüse 15 zugeführt und auf das Band extrudiert. Bei Verwendung von Rakeln wird das Polymer A und die Suspension des desaktivierten Isocyanats B über beheizte Pumpen und Leitungen 5 so zugeführt, dass vor der Rakel ein rotierender Wulst 16 entsteht. Die Oberfläche des Polymers der vorangegangenen Schicht muss beim Auftragen der folgenden Schicht (Suspension des festen Isocyanates) oder Aufstreuen des festen Isocyanats noch flüssig oder klebrig sein.

Die Adhäsion der verschiedenen Schichten in diesem Verbund soll gleich oder grösser sein als die Kohäsion innerhalb der Schichten.

Wie erwähnt, können die erfindungsgemässen Schmelzmassen als flächige Beschichtung, gegebenenfalls ein- oder zweiseitig aufgetragen auf ein Träger- oder Verstärkungsmaterial, als Raupe, als Profil, in Streifen, als Punkte, als trägerfreie Filme, Netze, Profile, Raupen oder Pulver auf die verklebenden, zu dichtenden oder zu beschichtenden Substrate aufgetragen werden. Beim Erreichen der Schmelz- oder Erweichungstemperatur des Polymeren verflüssigen sie sich. In diesem Zustand können sie Substratoberflächen oder Haftflächen benetzen. Beim Erreichen der Aufdickungstemperatur des festen, desaktivierten Isocyanats, welche höher sein soll als die Schmelz- oder Erweichungstemperatur des Polymeren, vernetzen sie irreversibel zu unschmelzbaren, hochmolekularen Polyurethanen oder Polyharnstoffen.

Die Wärmezufuhr ins System von Schmelzmassen und/oder Substrat(en) kann mit konventionellen Mitteln, wie beheizter Luft, beheizten Gasen, durch Wärme- oder Infrarotstrahlung, Kontaktwärme, Ausnützen von Restwärme von Substraten, oder induktiv, mit Mikrowellen, mit Widerstandheizung, durch Reibung, durch Ultraschallbestrahlung erfolgen.

Für die Vernetzung durch Wärme, die durch Induktion, durch Mikrowellen oder durch Widerstandheizung erzeugt wird, hat es sich von Vorteil erwiesen, wenn dem Schmelzkleber metallische Füllstoffe, Russ, Graphit, Metalloxyde oder Ferrite beigegeben werden.

### Beispiele

### Verwendete Materialien:

| Polymerkomponenten | Erweichungspunkt °C | Hydroxylzahl | Val g | Spez. Gewicht |
|---|---|---|---|---|
| Polycaprolacton Capa 231(a) | 55 | 37 | 1500 | 1,07 |
| | | | | |
| Polycaprolacton Capa 240(a) | 58 | 28 | 2000 | 1,07 |
| | | | | |
| Dynacoll 7350(b) | 65 | 30 | 1866 | 1,19 |
| Isocyanate | % NCO | Val g | Schmelz punkt °C | Funktionalität |
| | | | | |
| Isonate M 143 (c) | 29,4 | 143 | < 15 | 2,1-2,2 |
| Desmodur TT(d) | 24,1 | 174 | > 150 | 2,0-2,1 |
| | | | | |
| Amin Laromin C 260(e) | | 119,2 | < 0 | 2,0 |
| | | | | |
| Katalysator UL-29 (f) | Zinn(IV)-organische Verbindung | | | |
| | | | | |
| Weichmacher | BBP Butylbenzylphthalat(g), flüssig | | | |

| | | | | |
|---|---|---|---|---|
| (a) Lineares Polycaprolacton, Interox Chemicals Ltd. | | | | |
| (b) Linearer Polyester, Hüls AG | | | | |
| (c) Diphenylmethandiisocyanat, The Dow Chemical Co. | | | | |
| (d) Toluoldiisocyanat-uretdion, "Dimeres TDI", Bayer AG, mittlere Korngrösse 12µ | | | | |
| (e) 3,3'-Dimethyl-4,4'-diamino-dicyclohexylmethan, BASF AG, | | | | |
| (f) Witco Chem. Corp., | | | | |
| (g) Bayer AG | | | | |

### Beispiel 1:

### Komponente 1

Das hydroxyfunktionelle Polymer A wurde wie folgt hergestellt:

| | | | |
|---|---|---|---|
| (1) | Dynapol 7350 | 3732 g | (2 Val) |
| (2) | Isonate 143 | 143 g | (1 Val) |
| (3) | UL-29-Lösung, 10%ig in BBP | 4 g | |
| wurden während 12 Stunden bei 80°C zu | | | |
| (4) | | 3879 g Polymeren | (1 Val) |

umgesetzt.

### Komponente 2

Suspension des festen, desaktivierten Isocyanats

| | | | |
|---|---|---|---|
| (5) | Laromin C 260 | 6.6 g | (0.055 Val) |
| (6) | Benzylbutylphthalat | 374.4 g | |
| (7) | Desmodur TT | 200.0 g | (1.15 Val) |
| (8) | Total Suspension B | 581.0 g | (1.095 Val) |

Die beiden Komponenten wurden in einer 2-Komponenten-Mischmaschine in einem Mischungsverhältnis von 100 T. Komp. A zu 15 T. Komp. B bei 70°C durch beheizte Zahnradpumpen dosiert und in getrennten, beheizten Leitungen einem thermisch isolierten, statischen Wendelmischer (Durchmesser 10 mm) der Firma Mixpac AG, Rotkreuz (Schweiz) zugeführt, der mit 16 Elementen, d.h. mit in einem Rohr angeordneten gegenläufigen Wendeln, versehen war. (Innerer Rohrdurchmesser 10 mm, Länge eines Elementes 10 mm).

Der kontinuierlich gemischte Schmelzkleber wurde als Raupe auf die Oberfläche eines rechteckigen Profils von GFK aufgetragen. Der Schmelzkleber erstarrte infolge Wärmeentzug durch das Profil und die Umgebungsluft. Der latent reaktive Schmelzkleber war bei Raumtemperatur über 4 Wochen lagerfähig, das heisst, der Kleber war noch nach 4 Wochen Lagerzeit bei 70°C thermoplastisch verformbar mit klebriger Oberfläche.

Der latentreaktive Schmelzkleber wurde nach sieben Tagen durch Erwärmen in einem Ofen bei einer Temperatur von 80°C verflüssigt und mit einem weiteren GFK-Profil verpresst. Die Temperatur des Verbundes wurde auf 115°C gesteigert. Innerhalb 5 Minuten verfestigte sich die Klebeverbindung, sie wurde noch 30 Minuten bei dieser Temperatur belassen.

Die Klebeverbindung konnte bei Raumtemperatur nur unter Zerstörung des Verbundes wieder gelöst werden. Die Verbindung widerstand Temperaturen von 140°C unbeschadet.

### Beispiel 2:

### Komponente 1

Das hydroxyfunktionelle Polymer wurde wie folgt hergestellt:

| | | | |
|---|---|---|---|
| (1) | Capa 240 | 4500 g | (2.25 Val) |
| (2) | Isonate 143 | 179 g | (1.25 Val) |
| (3) | UL-29-Lösung, 10%ig in BBP | 5 g | |
| wurden während 2 Stunden bei 80°C zu | | | |
| (4) | | 4684 g Polymeren | (1 Val) |

umgesetzt, Schmelztemperatur 58°C.

### Komponente 2

Suspension eines festen, desaktivierten Isocyanats:

| | | | |
|---|---|---|---|
| (5) | Benzylbutylphthalat | 341.4 g | |
| (6) | Laromin C 260 | 8.6 g | (0.072 Val) |
| wurden gemischt und | | | |
| (7) | Desmodur TT | 200.0 g | (1.15 Val) |
| eingetragen und homogen verteilt. | | | |
| (8) | Suspension des festen Isocyanats | 550.0 g | (1.078 Val). |

Die beiden Komponenten wurden in einer 2-Komponenten-Mischmaschine in einem Mischungsverhältnis von 100 T. Komp. A zu 12 T. Komp. B bei 65°C durch beheizte Zahnradpumpen dosiert und in getrennten, beheizten Leitungen einem thermisch isolierten, statischen Mischer der Firma Mipac AG, Rotkreuz (Schweiz) zugeführt, der mit 16 in einem Rohr angeordneten gegenläufigen Wendeln versehen war. (Innerer Rohrdurchmesser 13 mm, Länge eines Elementes 13 mm.)

Der kontinuierlich gemischte Schmelzkleber wurde durch eine Schlitzdüse mit 3 mm Schichtdicke auf ein Stahlförderband mit adhäsiver Oberfläche extrudiert, nach Durchlaufen einer Kühlstrecke vom Band gelöst und in zentimetergrosse Stücke zerkleinert. Nach gänzlicher Auskühlung wurden die Stücke in einer Pulvermühle unter Kühlung durch Trockeneis gemahlen. Korngrössen über 500µ wurden in die Mühle zurückgeführt. Das Pulver wies einen Schmelzpunkt von 56°C auf, die Aufdikkungs-Temperatur wurde mit 98°C bestimmt.

### Beispiel 3:

Ein hydroxyfunktionelles Prepolymer wurde wie folgt hergestellt:

| | | | |
|---|---|---|---|
| (1) | Capa 240 | 4500 g | (2.25 Val) |
| (2) | Isonate 143 | 179 g | (1.25 Val) |
| (3) | UL-29-Lösung, 10%ig in BBP | 5 g | |
| wurden während 2 Stunden bei 80°C zu | | | |
| (4) | | 4684 g Prepolymeren | (1 Val) |

umgesetzt.

Suspension eines festen, desaktivierten Isocyanats:

| | | |
|---|---|---|
| (5) Capa 231 und | 500 g | (0.33 Val) |
| (6) Laromin C 260 | 8 g | (0.067 Val) |
| wurden bei 65 C gemischt und | | |
| (7) Desmodur TT | 260 g | (1.49 Val) |
| eingetragen und homogen verteilt. | | |
| (8) Suspension des festen Isocyanats | 768 g | (1.097 Val), |
| Schmelztemperatur über 50°C. | | |

Das hydroxyfunktionelle Prepolymer wurde bei 70°C auf ein adhäsives Stahlband in 8 Schichten von 100µ oder 106 g/m2, total 800µ oder 848 g/m2, mit beheizten Rakeln, Temperatur 70°C, aufgetragen. Die flüssigen Oberflächen der einzelnen Polymerschichten wurden jeweils sofort überschichtet mit 7 Schichten von 18,7µ oder 19,86 g/m2 Suspension 8, totale Menge 139 g/m2. Die Schichten der Suspension wurden in 7 Auftragsstationen aufgetragen, bestehend aus ebenfalls auf 70°C beheizten Rakeln. Die oberste Schicht wurde nicht mit der Suspension beschichtet.

Am Ende des Bandes wurde der Schichtverbund nach Durchlaufen einer Kühlstrecke vom Band gelöst und in zentimetergrosse Stücke verkleinert. Nach gänzlicher Auskühlung wurden die Stücke in einer Pulvermühle unter Kühlung durch Trockeneis gemahlen. Korngrössen über 500µ wurden in die Mühle zurückgeführt.

Für Textilklebeversuche mit den Pulvern der Beispiele 2 und 3 wurde ein Korngrössenbereich von 80 bis 300µ verwendet. Die Pulver wurden mit einem Auflagengewicht von ungefähr 30 g/m2 auf ein Baumwollgewebe gestreut. Die Pulver wurden mit der Oberfläche des Gewebes in einem Warmluftofen bei 140°C während 90 Sekunden gesintert. Diese beschichteten Gewebe können bei Raumtemperatur während mindestens 4 Wochen gelagert werden.

Die mit Pulver beschichteten Gewebe wurden mit unbehandeltem Gewebe in einer Presse bei einer Temperatur von 170°C während 20 Sekunden mit einem Druck von 2 bar laminiert und nachher im Umluftofen bei 160°C während 3 Minuten nachbehandelt.

Nach 7 Tagen wurden die Proben während einer Stunde in kochendem Wasser gewaschen, getrocknet und die Schälfestigkeit bestimmt.

| Prüfling nach DIN 54310 | Trennkraft **vor / nach** dem Kochen | | in g pro 2.5 cm **nach** chemischer Reinigung |
|---|---|---|---|
| Pulver nach Beispiel 2 | 1170 | 910 | 1157 |
| Pulver nach Beispiel 3 | 950 | 810 | 835 |

Die Versuche zeigten, dass eine thermostabile Vernetzung stattfindet: Das reaktive Pulver mit Schmelzpunkt von 56°C verwandelte sich nach Überschreiten der Aufdickungs-Temperatur in ein dreidimensional vernetztes, chemisch beständiges Polyurethan.

## Patentansprüche

1. Verfahren zum Herstellen einer bei Raumtemperatur festen, lagerstabilen, hitzehärtbaren Stoffmischung enthaltend:
(A) schmelzbare Polymere, die bei Temperaturen über 40°C in den flüssigen Zustand übergehen und die funktionelle, mit Isocyanat reaktive Gruppen tragen,
(B) pulverförmige, feste Di- oder Polyisocyanate,
(C) bzw. (C') und (C") Desaktivierungsmittel, die mit den an der Oberfläche des festen Polyisocyanats (B) liegenden reaktiven Gruppen reagieren können,
wobei in der gesamten Stoffmischung das Verhältnis der Isocyanatgruppen aus reaktivem, festem Isocyanat zur Summe der isocyanatreaktiven Gruppen 0,5 bis 2 Aequivalente beträgt,
**dadurch gekennzeichnet, dass** die Isocyanate (B) mit dem Desaktivierungsmittel (C) vorgemischt und dabei durch Bildung von phasentrennenden Oberflächenschichten auf den Polyisocyanatteilchen desaktiviert werden, wobei ein Teil (C') des Desaktivierungsmittels an die Polyisocyanatteilchen gebunden wird und daneben ungebundenes Desaktivierungsmittel (C'') vorhanden ist, dass bei einer Temperatur über dem Erweichungs- oder Schmelzpunkt des Polymeren (A), aber unterhalb der Reaktionstemperatur des oberflächendesaktivierten Isocyanats (B), das Vorgemisch aus (B) und (C) dem durch Erwärmung verflüssigten Polymer (A) mit einem solchen Mischungsgrad beigemischt wird, dass in der Stoffmischung Schichten erzeugt werden, in denen das Verhältnis von Polymer (A) zu Vorgemisch (B, C) abwechselnd grösser und kleiner ist als das durchschnittliche Verhältnis (V) dieser Stoffe in der gesamten Stoffmischung, und dass die Stoffmischung abgekühlt und verfestigt wird.

2. Verfahren nach Anspruch 1, **dadurch gekennzeichnet, dass** die Isocyanate (B) mit einem Desaktivierungsmittel (C') vorbehandelt sind, welches sich vom ungebundenen Desaktivierungsmittel (C'') unterscheidet.

3. Verfahren nach Anspruch 1, **dadurch gekennzeichnet, dass** als Desaktivierungsmittel (C) ein primäres oder sekundäres Amin zugegeben wird.

4. Verfahren nach einem der Ansprüche 1 bis 3, **dadurch gekennzeichnet, dass** das gebundene Desaktivierungsmittel (C') ein hochmolekulares Amin mit Molekulargewicht über 450, das freie Desaktivierungsmittel (C") ein Amin mit einem Molekulargewicht unter 450 ist.

5. Verfahren nach einem der Ansprüche 1 bis 4, **dadurch gekennzeichnet, dass** das Desaktivierungsmittel (C') mit der Oberfläche des pulverförmigen Isocyanats (B) reagiert und das freie Desaktivierungsmittel (C") dem desaktivierten Isocyanat beigefügt wird.

6. Verfahren nach einem der Ansprüche 1 bis 5, **dadurch gekennzeichnet, dass** das Vorgemisch und das verflüssigte Polymer schichtenweise auf ein Trägermaterial aufgebracht und auf diesem durch Abkühlen verfestigt werden.

## Claims

1. A process for producing a heat-hardenable mixture of substances which is solid at ambient temperature and which is stable in storage, including:
(A) fusible polymers which at temperatures above 40°C go into the liquid condition and carry the functional groups reactive with isocyanate,
(B) solid di- or polyisocyanates in powder form, and
(C) or (C') and (C") deactivation agents which can react with the reactive groups at the surface of the solid polyisocyanate (B),
wherein in the entire mixture of substances the ratio of the isocyanate groups of reactive solid isocyanate to the sum of the isocyanate-reactive groups is from 0.5 to 2 equivalents,
**characterised in that** the isocyanates (B) are pre-mixed with the deactivation agent (C) and **in that** procedure deactivated by the formation of phase-separating surface layers on the polyisocyanate particles, wherein a part (C') of the deactivation agent is bound to the polyisocyanate particles and present therebeside is unbound deactivation agent (C"), that at a temperature above the softening point or melting point of the polymer (A) but below the reaction temperature of the surface-deactivated isocyanate (B) the premix of (B) and (C) is added to the polymer (A) which is liquefied by heating, with such a degree of mixing that layers are produced in the mixture of substances, in which the ratio of polymer (A) to premix (B, C) is alternately greater and smaller than the average ratio (V) of said substances in the overall mixture of substances, and that the mixture of substances is cooled and hardened.

2. A process according to claim 1 **characterised in that** the isocyanates (B) are pre-treated with a deactivation agent (C') which differs from the unbound deactivation agent (C").

3. A process according to claim 1 **characterised in that** a primary or secondary amine is added as the deactivation agent (C).

4. A process according to one of claims 1 to 3 **characterised in that** the bound deactivation agent (C') is a high-molecular amine of a molecular weight of over 450 and the free deactivation agent (C") is an amine of a molecular weight of below 450.

5. A process according to one of claims 1 to 4 **characterised in that** the deactivation agent (C') reacts with the surface of the isocyanate (B) in powder form and the free deactivation agent (C") is added to the deactivated isocyanate.

6. A process according to one of claims 1 to 5 **characterised in that** the premix and the liquefied polymer are applied in layer-wise manner to a carrier material and are hardened thereon by cooling.

## Revendications

1. Procédé pour fabriquer un mélange de substances solide à la température ambiante, stable au stockage, durcissable par la chaleur, contenant :
(A) des polymères fusibles qui passent à l'état liquide à des températures supérieures à 40 °C et qui portent des groupes fonctionnels réagissant avec un isocyanate,
(B) des di ou polyisocyanates solides, pulvérulents,
(C) ou (C') ou (C") des agents de désactivation qui peuvent réagir avec les groupes réactifs situés à la surface du polyisocyanate solide (B),
dans lequel, dans la totalité du mélange de substances, le rapport entre les groupes isocyanate de l'isocyanate réactif solide et la somme des groupes réagissant avec les isocyanates est de 0,5 à 2 équivalents,
**caractérisé en ce que** les isocyanates (B) sont préalablement mélangés à l'agent de désactivation (C) et sont de ce fait désactivés par formation de couches superficielles séparatrices de phases sur les particules de polyisocyanate, une partie (C') de l'agent de désactivation se liant aux particules de polyisocyanate et de l'agent de désactivation non lié (C") étant simultanément présent, **en ce qu'**à une température supérieure au point de ramollissement ou de fusion du polymère (A) mais inférieure à la température de réaction de l'isocyanate (B) désactivé en surface, le prémélange de (B) et (C) est mélangé au polymère (A) liquéfié par échauffement, selon un taux de mélange tel que, dans le mélange de substances, il se forme des couches dans lesquelles le rapport entre le polymère (A) et le prémélange (B, C) soit alternativement supérieur et inférieur au rapport moyen (V) de ces substances dans la totalité du mélange de substances total et **en ce que** le mélange de substances est refroidi et solidifié.

2. Procédé selon la revendication 1, **caractérisé en ce que** les isocyanates (B) sont prétraités avec un agent de désactivation (C') qui est différent de l'agent de désactivation non lié(C").

3. Procédé selon la revendication 1, **caractérisé en ce qu'**une amine primaire ou secondaire est ajoutée en qualité d'agent de désactivation (C).

4. Procédé selon l'une des revendications 1 à 3, **caractérisé en ce que** l'agent de désactivation lié (C) est une amine à haut poids moléculaire possédant un poids moléculaire supérieur à 450 et l'agent de désactivation libre (C") est une amine possédant un poids moléculaire inférieur à 450.

5. Procédé selon l'une des revendications 1 à 4, **caractérisé en ce que** l'agent de désactivation (C') réagit avec la surface de l'isocyanate pulvérulent (B) et l'agent de désactivation libre (C") est ajouté à l'isocyanate désactivé.

6. Procédé selon l'une des revendications 1 à 5, **caractérisé en ce que** le prémélange et le polymère liquéfié sont déposés par couches sur une matière support et solidifiés sur cette matière par refroidissement.
